# EUROPÄISCHE PATENTANMELDUNG

(11) **EP 4 752 378 A1**
(43) Veröffentlichungstag der Anmeldung: **03.06.2026**
(21) Anmeldenummer: 25219324.8
(22) Anmeldetag: 28.11.2025
(51) Int. Cl.: F15B 13/04, F15B 13/044, F15B 9/02, E01B 27/16, F16K 31/524, F16K 11/07

(54) **HYDRAULIKVENTILKOMBINATION ZUR STOPFAGGREGATANSTEUERUNG**

(30) Priorität: 02.12.2024 AT 509462024
(71) Anmelder: Plasser & Theurer Export von Bahnbaumaschinen Gesellschaft m.b.H., 1010 Wien (AT)
(72) Erfinder: Ecker, Gabriel, 4203 Altenberg bei Linz (AT)

(57) **Zusammenfassung**

Die Erfindung betrifft eine Hydraulikventilkombination (10, 10') mit mindestens einem Hydraulikventil (1, 1') zur Erzeugung eines Volumenstromregimes für die Ansteuerung von hydraulischen Aktuatoren (9, 211A, 211B) eines Stopfaggregats (2, 2'), wobei das Volumenstromregime des Hydraulikmediums im Stopfbetrieb durch einen zeitlichen Schwingungsverlauf charakterisiert ist und ein Schieberelement (12) des mindestens einen Hydraulikventils (1, 1') dazu angeordnet ist, dass seine Bewegung einen periodischen Schwingungsverlauf des Volumenstromregimes an den Arbeitsleitungsanschlüssen des Hydraulikventils (1, 1') zur Folge hat, wobei das Schieberelement (12) des Hydraulikventils (1, 1') für eine mechanische Zwangsführung der Schieberelementbewegung geeignet ist, wobei das Schieberelement (12) mechanisch mit einem Stellelement (14, 14') gekoppelt ist, das Stellelement (14, 14') für die Zwangsführung der Schieberelementbewegung eingerichtet ist und das Stellelement (14, 14') weiters angeordnet ist, um die Frequenz des periodischen Schwingungsverlaufs des Volumenstromregimes an den Arbeitsleitungsanschlüssen (113, 114) des Hydraulikventils (1, 1') vorzugeben.

## Beschreibung

Die Erfindung betrifft eine Hydraulikventilkombination mit mindestens einem Hydraulikventil zur Erzeugung eines Volumenstromregimes für die Ansteuerung von hydraulischen Aktuatoren eines Stopfaggregats, wobei das Volumenstromregime des Hydraulikmediums im Stopfbetrieb durch einen zeitlichen Schwingungsverlauf charakterisiert ist und ein Schieberelement des mindestens einen Hydraulikventils dazu angeordnet ist, dass seine Bewegung einen periodischen Schwingungsverlauf des Volumenstromregimes an den Arbeitsleitungsanschlüssen des Hydraulikventils zur Folge hat.

Stopfaggregate dienen zum Umlagern und Verdichten des Schotters der Schotterschicht eines Schienenfahrweges unterhalb von Schwellen, die gemeinsam mit den auf ihnen befestigten Schienen einen Gleisrost bilden, auf dem die Räder eines Schienenfahrzeuges abrollen.

Neben Stopfaggregaten, die die Schotterunterlage nur einer Schwelle bearbeiten, bevor sie mit einem als Gleisbaumaschine ausgebildeten Schienenfahrzeug, auf dem sie befestigt sind, um einen Schwellenabstand in Arbeitsrichtung weiterbewegt werden, gibt es auch Mehrschwellen-Stopfaggregate für die gleichzeitige Bearbeitung der Schotterunterlage von zwei, drei oder vier Schwellen.

Allerdings sind die Baubreiten der meisten bekannten Stopfaggregate zur Bearbeitung einer Schwelle größer als ein Schwellenabstand, wodurch es nicht möglich ist, eine Anzahl n baugleicher Aggregate derart hintereinander zu reihen, um entsprechend viele Schwellen n gleichzeitig zu unterstopfen.

In EP 3 239 398 A1 ist ein Stopfaggregat für eine Gleisstopfmaschine offengelegt, wobei jedem als Schwenkhebel ausgebildeten Stopfwerkzeug eines Stopfwerkzeugpaares des Stopfaggregats jeweils ein Hydraulikzylinder zugeordnet ist, der sowohl den Beistellantrieb als auch den Schwingungsantrieb bildet.

AT 525 272 A4 offenbart ein Stopfaggregat zum Unterstopfen eines Gleises mit paarweise angeordneten Stopfwerkzeugen, die mittels eines jeweiligen Beistellzylinders zueinander beistellbar sind, wobei im jeweiligen Beistellzylinder ein Beistellkolben angeordnet ist und jedem Beistellzylinder ein Vibrationskolben zugeordnet ist, um einer Beistellbewegung eine Vibration zu überlagern.

In AT 513 973 A4 wird ein Stopfaggregat für Gleisbaumaschinen gezeigt, wobei ein Hydraulikzylinder mit einem Wegsensor zur Bestimmung der Hydraulikzylinderstellung als Beistellantrieb und als Schwingungsantrieb eines Stopfwerkzeug dient, das gemeinsam mit einem weiteren Stopfwerkzeug ein Stopfwerkzeugpaar des Stopfaggregats bilden.

Die Verwendung vollhydraulischer Stopfaggregate, die neben der Beistellbewegung der Stopfwerkzeuge auch deren Vibration mittels hydraulischer Aktoren anstatt einer Exzenterwelle erzeugen, ermöglicht eine derartige Verkürzung der Baubreite, so dass die Baubreite eines Stopfaggregatmodules für eine Schwelle einen Schwellenabstand nicht überschreitet.

Zur Vibrationserzeugung werden dabei Volumenstromregime hoher Amplitude und Frequenz benötigt.

Diese können beim Einsatz von Proportionalventilen mit elektromagnetischer Ansteuerung bestenfalls in verminderter Qualität bereitgestellt werden, woraus insbesondere unerwünschte Einbrüche der Vibrationsamplitude oder Vibrationsfrequenz resultieren.

Ein solches geregeltes Proportionalventil mit elektromagnetischer Ansteuerung zur Vibrationserzeugung nach dem Stand der Technik begrenzt daher die betriebsmäßig zulässigen Bereiche von Amplitude und Frequenz des Volumenstromregimes.

CN 114 215 813 A offenbart eine Hydraulikventilanordnung mit einem 4/3 Proportionalventil, das einen Hochdruckanschluss und einen Niederdruckanschluss entweder direkt oder überkreuzt mit zwei Ausgangsanschlüssen verbindet oder in der dritten Ventilstellung die Eingangsanschlüssen und die Ausgangsanschlüsse hydraulisch voneinander trennt, wobei das Umschalten zwischen den drei Ventilstellungen mittels hydraulischer Steueranschlüsse erfolgt.

Der Erfindung liegt die Aufgabe zugrunde, für eine Hydraulikventilkombination mit mindestens einem Hydraulikventil zur Erzeugung eines Volumenstromregimes für die Ansteuerung von hydraulischen Aktuatoren eines Stopfaggregats eingangs genannter Art eine Verbesserung gegenüber dem Stand der Technik anzugeben.

Eine weitere Aufgabe der Erfindung ist ein Verfahren zum Betreiben der Hydraulikventilkombination zu offenbaren.

Erfindungsgemäß werden diese Aufgaben gelöst durch eine Hydraulikventilkombination nach Anspruch 1 und ein zugehöriges Verfahren nach Anspruch 9.

Abhängige Ansprüche geben vorteilhafte Ausgestaltungen der Erfindung an.

Gemäß der Erfindung umfasst eine Hydraulikventilkombination mindestens ein Hydraulikventil zur Erzeugung eines Volumenstromregimes für die Ansteuerung von hydraulischen Aktuatoren eines Stopfaggregats, wobei das Volumenstromregime des Hydraulikmediums im Stopfbetrieb durch einen zeitlichen Schwingungsverlauf charakterisiert ist und ein Schieberelement des mindestens einen Hydraulikventils dazu angeordnet ist, dass seine Bewegung einen periodischen Schwingungsverlauf des Volumenstromregimes an den Arbeitsleitungsanschlüssen des Hydraulikventils zur Folge hat, wobei weiters das Schieberelement des Hydraulikventils für eine mechanische Zwangsführung der Schieberelementbewegung geeignet ist sowie das Schieberelement mechanisch mit einem Stellelement gekoppelt ist, das Stellelement für die Zwangsführung der Schieberelementbewegung eingerichtet ist und das Stellelement weiters angeordnet ist, um die Frequenz des periodischen Schwingungsverlaufs des Volumenstromregimes an den Arbeitsleitungsanschlüssen des Hydraulikventils vorzugeben.

In einer bevorzugten Ausführungsform der Hydraulikventilkombination umfasst das Stellelement, das mechanisch mit dem Schieberelement des Hydraulikventils gekoppelt ist, als Antrieb einen Linearmotor.

In einer weiteren Ausführungsform der Hydraulikventilkombination ist es günstig, dass der Antrieb des Stellelements, das mechanisch mit dem Schieberelement des Hydraulikventils gekoppelt ist, ein rotierender Motor ist.

In dieser alternativen Ausführungsform der Hydraulikventilkombination umfasst der Stellelementantrieb vorzugsweise einen Kurbeltrieb, der eingangsseitig mit dem rotierenden Motor und ausgangsseitig mit dem Ventilschieberelement mechanisch gekoppelt ist, sodass die Rotationsbewegung des Motorabtriebs in eine Linearbewegung des Ventilschieberelements umgesetzt ist.

Vorzugsweise ist der Antriebsmotor des Stellelements der Hydraulikventilkombination ein elektromechanischer Wandler.

Es ist günstig, wenn die Hydraulikventilkombination zusätzliche Hydraulikventile umfasst, die zwischen dem Hydraulikventil mit dem zwangsgeführten Ventilschieber und den hydraulischen Aktuatoren des Stopfaggregats angeordnet sind und zur Beeinflussung des Volumenstromregimes des Hydraulikmediums dienen.

Das Hydraulikmedium leitet dabei hydraulische Energie und davon abgeleitete mechanische Kraftwirkung an die Verbraucher.

Es ist günstig, wenn die zusätzlichen Hydraulikventile der Hydraulikventilkombination angeordnet sind, um die Amplitude des Volumenstromregimes des Hydraulikmediums zu verändern.

Es ist besonders günstig, wenn die zusätzlichen Hydraulikventile der Hydraulikventilkombination angeordnet sind, um den als Offset bezeichneten Gleichanteil des Volumenstromregimes des Hydraulikmediums zu verändern.

Ein Verfahren zum Betreiben einer der beschriebenen Ausführungsformen der Hydraulikventilkombination ist gekennzeichnet durch eine Ansteuerung der Antriebseinheit des Stellelements, die eine periodische Bewegung des Schieberelements, das mit dem Stellelement mechanisch gekoppelt ist, mit der Frequenz f bewirkt und dass die periodische Schieberbewegung des zwangsgeführten Hydraulikventils ein Volumenstromregime des durch das Hydraulikventil modulierten Hydraulikmediums zur Folge hat, das durch eine periodische Schwingung mit der Frequenz f charakterisiert ist.

Vorzugsweise ist das Verfahren zum Betreiben einer Hydraulikventilkombination derart ausgestaltet, dass eine Veränderung der Ansteuerung zusätzlich zwischen dem zwangsgeführten Hydraulikventil und den hydraulischen Aktuatoren angeordneter Hydraulikventile eine Veränderung der Schwingungsamplitude des Volumenstromregimes des durch die Hydraulikventilkombination modulierten Hydraulikmediums zur Folge hat.

Es ist des Weiteren günstig, wenn ein Verfahren zum Betreiben einer Hydraulikventilkombination derart ausgestaltet ist, dass eine Veränderung der Ansteuerung zusätzlich zwischen dem zwangsgeführten Hydraulikventil und den hydraulischen Aktuatoren angeordneter Hydraulikventile eine Veränderung des Gleichanteils der Schwingung des Volumenstromregimes des durch die Hydraulikventilkombination modulierten Hydraulikmediums zur Folge hat.

Die Erfindung wird nachfolgend in beispielhafter Weise unter Bezugnahme auf die beigefügten Figuren erläutert. Es zeigen in schematischer Darstellung:
- Fig. 1: Eine Schnittdarstellung eines zwangsgeführten Hydraulikventils
- Fig. 2: Ansteuerung eines Stopfaggregats mit einer Hydraulikventilkombination
- Fig. 3: Mehrschwellen-Stopfaggregat in schmaler Ausführung
- Fig. 4: Schienenfahrzeug mit Mehrschwellen-Stopfaggregat aus Figur 3
- Fig. 5: Ansteuerung eines hydraulischen Aktuators mit einer Hydraulikventilkombination umfassend ein zwangsgeführtes Hydraulikventil nach Figur 1

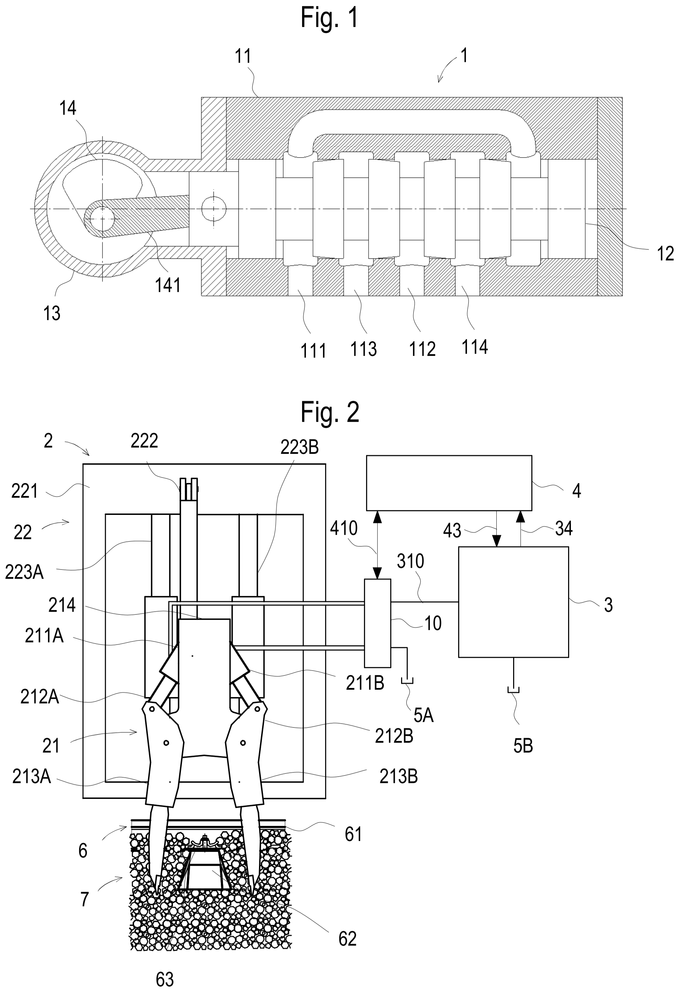

Figur 1 zeigt eine Ausführungsform eines Hydraulikventils 1 umfassend ein Ventilgehäuse 11, ein zwangsgeführtes Schieberelement 12, ein mit dem Ventilgehäuse verbundenes Gehäuse 13 für ein Stellelement 14 mit einem Kurbeltrieb 141 sowie Leitungsanschlüsse 111 bis 114.

In der in Figur 1 dargestellten Stellung des Schieberelements 12, die einer Mittelstellung zwischen den beiden Randstellungen entspricht, sind die Leitungsanschlüsse 111 bis 114 jeweils voneinander getrennt.

Insbesondere ist der Leitungsanschluss 111, der das Hydraulikventil 1 mit einer Hochdruckleitung 310 oder mittels einer Niederdruckleitung mit einem Tankbehälter 5A verbindet getrennt von den Anschlüssen 113 und 114, die das Hydraulikventil 1 mittels einer zusätzlichen Hydraulikventileinheit 101 mit einer stangenseitigen Druckkammer 911 bzw. einer kolbenseitigen Druckkammer 912 eines linearen hydraulischen Aktuators 9 verbinden.

In der in Figur 1 gezeigten Mittelstellung des Schieberelements 12 ist der Leitungsanschluss 112, der komplementär zum Leitungsanschluss 111 das Hydraulikventil 1 entweder mit einer Hochdruckleitung 310 oder mittels einer Niederdruckleitung mit einem Tankbehälter 5A verbindet, gleichfalls von den Anschlüssen 114 und 113 getrennt.

Wird das Schieberelement hingegen in der gezeigten Darstellung der Figur 1 mittels des Stellelements 14 und insbesondere mittels des Kurbeltriebs 141 von dieser Mittelstellung zur rechten Randstellung bewegt, so wird einerseits der Leitungsanschluss 111 mit dem Leitungsanschluss 113 fluidleitend verbunden und andererseits erfolgt gleichfalls eine fluidleitende Verbindung zwischen dem Leitungsanschluss 112 und dem Leitungsanschluss 114.

Der Volumenstrom des Hydraulikmediums nimmt bei dieser Schieberbewegung kontinuierlich zu und erreicht seinen maximalen Wert, wenn die rechte Randstellung des Schieberelements 12 erreicht ist.

Wenn das Schieberelement 12 seine rechte Randstellung erreicht hat, bewegt es sich, sofern der rotatorische Antrieb des Stellelements 14 seine Drehrichtung beibehält, mittels des Kurbeltriebs 141, der seine Bewegungsrichtung ändert, in die entgegengesetzte Richtung bis zur linken Randstellung.

Dabei nimmt der Volumenstrom des Hydraulikmediums zunächst wieder ab, bis er, bei Erreichen der Mittelstellung, vollständig unterbrochen ist.

Bei der weiteren Bewegung des Schieberelements 12 von der Mittelstellung, bei der die Leitungsanschlüsse 111 bis 114 voneinander getrennt sind, zur linken Randstellung, wird einerseits eine fluidleitende Verbindung zwischen dem Leitungsanschluss 111 und dem Leitungsanschluss 114 und andererseits zwischen dem Leitungsanschluss 112 und dem Leitungsanschluss 113 hergestellt.

Der Volumenstrom nimmt dabei wieder kontinuierlich zu und erreicht mit der linken Randstellung seinen Maximalwert.

Dann dreht sich die Bewegungsrichtung des Kurbeltriebs 141, der als Teil des Stellelements 14 dessen rotatorische Bewegung in die lineare Bewegung zum Antrieb des Schieberelements 12 umsetzt, wieder um, sofern der rotatorische Antriebsmotor seine Drehrichtung weiterhin beibehält, und der Volumenstrom nimmt wieder kontinuierlich ab, bis er bei neuerlichem Erreichen der Mittelstellung wieder ganz erliegt.

Bei fortgesetzter Bewegung des Schieberelements 12 in Richtung der rechten Randstellung stellen sich die bereits beschriebenen Verbindungen der Leitungsanschlüsse (111 mit 113 und 112 mit 114) und ein zunehmender Volumenstrom des Hydraulikmediums ein.

Dadurch ergibt sich bei ununterbrochener Drehbewegung gleicher Drehzahl des rotatorischen Antriebsmotors des Stellelements 14 eine periodisch schwingende Bewegung des Kurbeltriebs 141 und aufgrund der mechanischen Kopplung von Kurbeltrieb 141 und Schieberelement 12 führt dieses eine lineare periodische Schwingungsbewegung aus.

Durch diese erzwungene periodische Linearbewegung des Schieberelements 12 wird einerseits der Leitungsanschluss 111 abwechselnd mit dem Leitungsanschluss 113 und 114 fluidleitend verbunden und andererseits wird der Leitungsanschluss 112 jeweils komplementär dazu mit dem Leitungsanschluss 114 und 113 ebenfalls fluidleitend verbunden.

Durch die sich dabei zusätzlich ergebende Zunahme und Abnahme der Volumenströme des Hydraulikmediums stellt sich an den Leitungsanschlüssen 113 und 114 eine periodische Schwingung des Hydraulikmediums ein, die zuerst an die zusätzliche Hydraulikventilkombination 101 und dann, gegebenenfalls durch die Hydraulikventilkombination 101 beeinflusst, die beiden linearen hydraulischen Aktuatoren 211A und 211B des Stopfwerkzeugs 21 übertragen wird.

Figur 2 zeigt eine Hydraulikventilkombination 10 gemeinsam mit einem Aggregat 3 mit einer Regler-Einheit 4 zur Erzeugung des erforderlichen Versorgungsdrucks und einem Stopfaggregat 2 mit einem Stopfwerkzeugpaar 21 zum Unterstopfen von Schwellen 62, auf denen Schienen 61 mit Schienenbefestigungsmitteln 63 befestigt sind, und die in einer Schotterschicht 7 des Oberbaus ruhen.

Die Kombination aus einem Schienenpaar 61 und einer Vielzahl von Schwellen 62, auf denen dieses Schienenpaar 61 mit Schienenbefestigungsmittel 63 befestigt ist, wird als Gleisrost 6 bezeichnet.

Das Aggregat 3 zur Bereitstellung des Versorgungsdrucks für die hydraulischen Aktuatoren 211A, 211B des Stopfwerkzeugpaares 21 des Stopfaggregates 2 ist in einer bevorzugten Ausführungsform ein Akkusystem, dass Messwerte von Betriebsgrößen, insbesondere dem über die hydraulische Leitung 310 bereitgestellten Druck, Volumenstrom, Massenstrom oder die Temperatur des Hydraulikmediums, über die Signalleitung 34 an eine Regler-Einheit 4 übermittelt, die aufgrund dieser Messwerte ein Steuersignal erzeugt, das über die Signalleitung 43 an das Aggregat 3 übermittelt wird.

Ebenso werden die Stellantriebe der Hydraulikventile in der Hydraulikventilkombination 10 mittels Steuersignale der bidirektionalen Signalleitung 410 der Regler Einheit 4 angesteuert und Betriebsgrößen wie Positionen der Ventile, Drücke, Volumenströme oder die Temperatur innerhalb der Ventilkombination 10, insbesondere an deren Ein- und Ausgangsanschlüssen werden mittels derselben Signalleitung 410 an die Regler-Einheit 4 übermittelt, um daraus Steuersignale zu erzeugen oder abzuändern.

Das mittels des Aggregats 3 aus einem Tankbehälter 5B auf ein hohes Druckniveau geförderte Hydraulikmedium wird mittels der Hydraulikventilkombination 10, die insbesondere das Hydraulikventil 1 mit dem zwangsgeführten Schieberelement 12 enthält, an die hydraulischen Aktuatoren 211A, 211B weitergeleitet, deren Bewegungsenergie mittels der Schwenkhebel 212A, 212B an die Stopfpickel 213A, 213B übertragen wird, die in der Folge aufgrund der Beistellbewegungen und der Vibrationen Arbeit gegenüber dem unterhalb einer Schwelle 62 befindlichen Schotter der Schotterschicht 7 des Schienenfahrwegoberbaus verrichten.

Das von den hydraulischen Aktuatoren 211A, 211B abfließende Hydraulikmedium wird mittels der Hydraulikventilkombination 10 in einen Tankbehälter 5A geleitet.

Die Stopfwerkzeugpaare 21 sind auf einem Träger 214 gelagert, der mit einem Schlitten verbunden ist.

Die Anordnung aus Schlitten, Träger 214 und Stopfwerkzeugpaaren 21 kann mittels des hydraulischen Aktuators 222 entlang der beiden Führungsstangen 223A und 223B, die in einem Stopfaggregatrahmen 22 angeordnet sind, von einer oberen Endstellung in eine untere Endstellung bewegt werden.

In der unteren Endstellung befinden sich die Stopfpickel 213A und 213B vollständig in der Schotterschicht unterhalb der zu bearbeitenden Schwelle 62, wohingegen die Stopfpickel 213A und 213B sich in der oberen Endstellung gänzlich außerhalb der Schotterschicht und oberhalb des Gleisrostes 6 befinden und in dieser Position von einer bereits bearbeitenden Schwelle 62 zu einer in Arbeitsrichtung folgenden nächsten zu bearbeitenden Schwelle 62 weiterbewegt werden können.

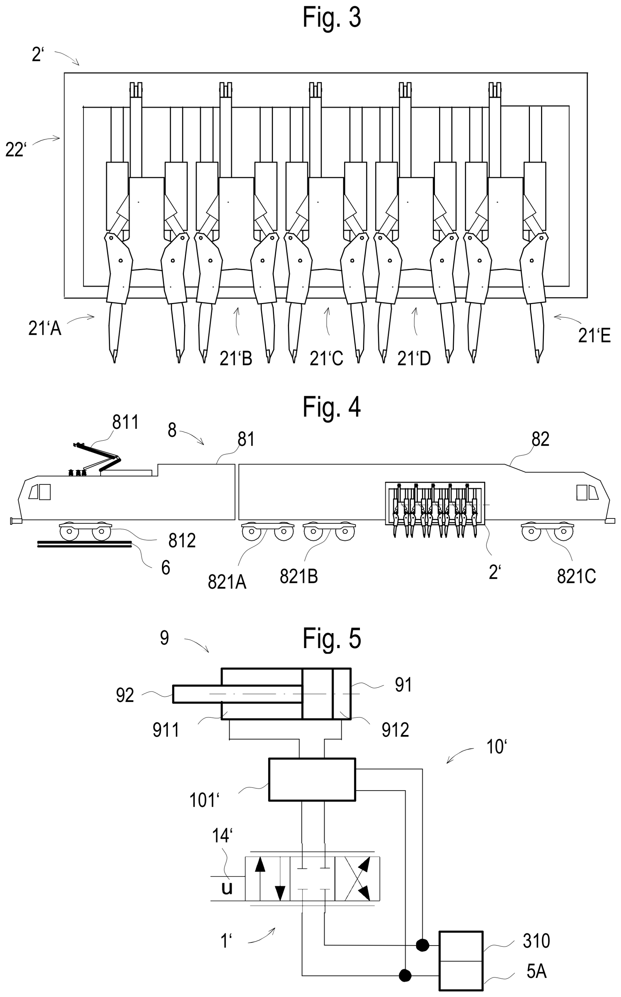

Figur 3 zeigt eine Variante 2' des Stopfaggregats aus Figur 2 bei dem insgesamt fünf Stopfwerkzeuge 21'A, 21'B, 21'C, 21'D und 21'E jeweils einzeln in vertikaler Richtung verstellt werden können und dabei in einem gemeinsamen Stopfaggregatrahmen 22' angeordnet sind.

Dieses Mehrschwellen-Stopfaggregat 2' ist in Figur 4 als Arbeitsaggregat des Schienenfahrzeugteils 82 eines Schienenfahrzeugs 8 angeordnet.

Dieses Schienenfahrzeug 8 kann mittels eines Triebkopfes 81 mit dem Schienenfahrwerk 812 auf dem Gleisrost 6 bewegt werden.

Der Triebkopf 81 ist auch mit einem als Pantograph ausgebildeten Stromabnehmer 811 ausgestattet, der die Fahrt unter Strom ermöglicht.

Der Triebkopf 81 ist mit dem Schienenfahrzeugteil 82, der das Mehrschwellen-Stopfaggregat 2' trägt mittels einer nicht dargestellten Koppelvorrichtung verbunden.

Der Schienenfahrzeugteil 82 umfasst drei Fahrwerke, insbesondere Schienenfahrwerke 821A, 821B und 821C.

Figur 5 zeigt die Ansteuerung eines hydraulischen Aktuators 9 mittels einer Hydraulikventilkombination 10' mit einer weiteren Ausführungsform 1' des zwangsgeführten Hydraulikventils 1 mit einem Stellelement 14'.

In der dargestellten Ausführungsform 1' ist das zwangsgeführte Hydraulikventil ein 4/3 Proportionalventil, das einen Hochdruckleitungsanschluss 310 und einen Niederdruckanschluss zur Verbindung mit einem Tankbehälter 5A mittels einer weiteren Hydraulikventileinheit 101' mit der stangenseitigen Druckkammer 911 und mit der kolbenseitigen Druckkammer 912 eines linear wirkenden hydraulischen Aktuators 9 verbindet.

Der hydraulische Aktuator 9 umfasst dabei insbesondere ein Gehäuse 91 und einen Kolben mit Stange 92, der durch seine Bewegung einerseits die Volumina der stangenseitigen Druckkammer 911 und der kolbenseitigen Druckkammer 912 im Gehäuse 91 verändert und diese Bewegung andererseits auf weitere mit der Stange 92 mechanisch gekoppelte Komponenten, insbesondere die Schwenkhebel 212A, 212B eines Stopfwerkzeugpaares 21 überträgt.

Das zwangsgeführte Hydraulikventil 1' erzeugt in dieser Anordnung eine periodische Schwingungsbewegung des Hydraulikmediums, die mittels der weiteren Hydraulikventileinheit 101' in Amplitude und Offset verändert werden kann, um den Kolben mit Stange 92 die für die jeweilige Phase eines Stopfzyklus der Stopfpickelpaare 213A und 213B benötigte Bewegung aufzuprägen.

Die Hydraulikventileinheit 101' ist ebenfalls mittels der Hochdruckleitung 310 mit der hydraulischen Versorgung und mittels der Niederdruckleitung 5A fluidleitend mit einem Tankbehälter verbunden.

Somit kann bei Verminderung der Amplitude des periodisch schwingenden Volumenstromregimes des zwangsgeführten Hydraulikventils 1' Hydraulikmedium mittels der Niederdruckleitung 5A in den Tankbehälter abgelassen werden.

Zusätzliches Hydraulikmedium kann hingegen mittels der Hochruckleitung 310 von der hydraulischen Versorgung bezogen werden, um dem schwingenden Volumenstromregime des zwangsgeführten Hydraulikventiles 1' mit Hilfe des Hydraulikventileinheit 101' einen Gleichanteil zu überlagern, wodurch die resultierende Schwingung einen Offset aufweist.

Der offenbarte Erfindungsgegenstand ist nicht auf die dargestellten und beschriebenen Ausführungsformen beschränkt.

Beispielsweise sind andere konstruktive Ausführungsformen des zwangsgeführten Hydraulikventils (1, 1') und weitere Varianten der Ansteuerung der Hydraulikventilkombination (10, 10') durch die folgenden Ansprüche mitumfasst.

## Patentansprüche

1. Hydraulikventilkombination (10, 10') mit mindestens einem Hydraulikventil (1, 1') zur Erzeugung eines Volumenstromregimes für die Ansteuerung von hydraulischen Aktuatoren (9, 211A, 211B) eines Stopfaggregats (2, 2'), wobei das Volumenstromregime des Hydraulikmediums im Stopfbetrieb durch einen zeitlichen Schwingungsverlauf charakterisiert ist und ein Schieberelement (12) des mindestens einen Hydraulikventils (1, 1') dazu angeordnet ist, dass seine Bewegung einen periodischen Schwingungsverlauf des Volumenstromregimes an den Arbeitsleitungsanschlüssen des Hydraulikventils (1, 1') zur Folge hat, **dadurch gekennzeichnet, dass** das Schieberelement (12) des Hydraulikventils (1, 1') für eine mechanische Zwangsführung der Schieberelementbewegung geeignet ist, wobei das Schieberelement (12) mechanisch mit einem Stellelement (14, 14') gekoppelt ist, das Stellelement (14, 14') für die Zwangsführung der Schieberelementbewegung eingerichtet ist und das Stellelement (14, 14') weiters angeordnet ist, um die Frequenz des periodischen Schwingungsverlaufs des Volumenstromregimes an den Arbeitsleitungsanschlüssen (113, 114) des Hydraulikventils (1, 1') vorzugeben.

2. Hydraulikventilkombination (10, 10') nach Anspruch 1, **dadurch gekennzeichnet, dass** das Stellelement (14, 14'), das mechanisch mit dem Schieberelement (12) des Hydraulikventils (1, 1') gekoppelt ist, als Antrieb einen Linearmotor umfasst.

3. Hydraulikventilkombination (10, 10') nach Anspruch 1, **dadurch gekennzeichnet, dass** das Stellelement (14, 14'), das mechanisch mit dem Schieberelement (12) des Hydraulikventils (1, 1') gekoppelt ist, als Antrieb einen rotierenden Motor umfasst.

4. Hydraulikventilkombination (10, 10') nach Anspruch 3, **dadurch gekennzeichnet, dass** der Stellelementantrieb einen Kurbeltrieb (141) umfasst, der eingangsseitig mit dem rotierenden Motor und ausgangsseitig mit dem Schieberelement (12) mechanisch gekoppelt ist, um die Rotationsbewegung des Motorabtriebs in eine Linearbewegung des Schieberelements (12) umzusetzen.

5. Hydraulikventilkombination (10, 10') nach einem der Ansprüche 2 bis 4, **dadurch gekennzeichnet, dass** der Antriebsmotor des Stellelements (14, 14') ein elektromechanischer Wandler ist.

6. Hydraulikventilkombination (10, 10') nach einem der Ansprüche 1 bis 5, **dadurch gekennzeichnet, dass** eine zusätzliche Hydraulikventileinheit (101') zur Beeinflussung des Volumenstromregimes des Hydraulikmediums für die hydraulischen Aktuatoren (9, 211A, 211B) des Stopfaggregats (2, 2') zwischen dem Hydraulikventil (1, 1') mit zwangsgeführtem Schieberelement (12) und den hydraulischen Aktuatoren (9, 211A, 211B) angeordnet sind.

7. Hydraulikventilkombination (10, 10') nach Anspruch 6, **dadurch gekennzeichnet, dass** die zusätzliche Hydraulikventileinheit (101') angeordnet ist, um die Amplitude des Volumenstromregimes des Hydraulikmediums zu verändern.

8. Hydraulikventilkombination (10, 10') nach einem der Ansprüche 6 oder 7, **dadurch gekennzeichnet, dass** die zusätzliche Hydraulikventileinheit (101') angeordnet ist, um den als Offset bezeichneten Gleichanteil des Volumenstromregimes des Hydraulikmediums zu verändern.

9. Verfahren zum Betreiben einer Hydraulikventilkombination (10, 10') nach einem der Ansprüche 1 bis 8, **dadurch gekennzeichnet, dass** eine Antriebseinheit des Stellelements (14, 14') in der Weise angesteuert wird, dass das Schieberelement (12), das mit dem Stellelement (14, 14') mechanisch gekoppelt ist, eine periodische Bewegung mit der Frequenz f ausführt und dass die periodische Schieberbewegung des zwangsgeführten Hydraulikventils (1, 1') ein Volumenstromregime des durch das Hydraulikventil (1, 1') modulierten Hydraulikmediums zur Folge hat, das durch eine periodische Schwingung mit der Frequenz f charakterisiert ist.

10. Verfahren nach Anspruch 9, **dadurch gekennzeichnet, dass** die zusätzlich zwischen dem zwangsgeführten Hydraulikventil (1, 1') und den hydraulischen Aktuatoren (9, 211A, 211B) angeordnete Hydraulikventileinheit (101') angesteuert wird.

11. Verfahren nach Anspruch 10, **dadurch gekennzeichnet, dass** eine Veränderung der Ansteuerung der zwischen dem zwangsgeführten Hydraulikventil (1, 1') und den hydraulischen Aktuatoren (9, 211A, 211B) angeordneten Hydraulikventileinheit (101') eine Veränderung der Schwingungsamplitude des Volumenstromregimes des durch die Hydraulikventilkombination (10, 10') modulierten Hydraulikmediums zur Folge hat.

12. Verfahren zum Betreiben einer Hydraulikventilkombination (10, 10') nach Anspruch 10, **dadurch gekennzeichnet, dass** eine Veränderung der Ansteuerung der zwischen dem zwangsgeführten Hydraulikventil (1, 1') und den hydraulischen Aktuatoren (9, 211A, 211B) angeordneten Hydraulikventileinheit (101') eine Veränderung des Gleichanteils der Schwingung des Volumenstromregimes des durch die Hydraulikventilkombination (10, 10') modulierten Hydraulikmediums zur Folge hat.
